# EUROPÄISCHE PATENTANMELDUNG

(11) **EP 2 696 554 A1**
(43) Veröffentlichungstag der Anmeldung: **12.02.2014**
(21) Anmeldenummer: 13002706.3
(22) Anmeldetag: 24.05.2013
(51) Int. Cl.: H04L 29/06, H04L 29/08, H04M 3/428

(54) **Verfahren zum Abruf einer Mediendatei in einem Telekommunikationssystem, ein Computerprogrammprodukt zum Ausführen des Verfahrens und ein Telekommunikationssystem zum Abruf der Mediendatei**

(30) Priorität: 06.08.2012 DE 102012015570
(71) Anmelder: Unify GmbH & Co. KG, 81379 München (DE)
(72) Erfinder: Glaser, Martin, 59192 Bergkamen (DE); Rist, Claus, 44795 Bochum (DE); Gronostay, Bernd, 45731 Waltrop (DE)
(74) Vertreter: Fritzsche, Thomas

(57) **Zusammenfassung**

Ein Verfahren zum Abruf einer Mediendatei (M2, M3, 27A-27E) in einem Telekommunikationssystem (4, 4A, 4B), das eine Telekommunikationssteuereinheit (1, 1A, 1B) und mehrere an die Telekommunikationssteuereinheit (1, 1A, 1 B) angeschlossene Telekommunikationsendgeräte (2, 2A, 2B, 3, 3A-3C) umfasst, wobei ein Inhalt der abgerufenen Mediendatei (M2, M3, 27A-27E) über eine aufgebaute Verbindung (2', 3', 5A, 5B) zu einem der mehreren Telekommunikationsendgeräte (2, 3, 3C) einem Benutzer des Telekommunikationsendgerätes (2, 3, 3C) unaufgefordert präsentiert wird, umfasst die folgenden Schritte: Vorsehen einer Schnittstelle (S, SA, SB) in der Telekommunikationssteuereinheit (1, 1A, 1 B) derart, dass über die Schnittstelle (S, SA, SB) auf die Mediendatei (M2, M3, 27A-27E), die außerhalb des Telekommunikationssystems (4, 4A, 4B) gespeichert ist, zugegriffen werden kann, Einrichten eines von jedem der mehreren Telekommunikationsendgeräte (2, 2A, 2B, 3, 3A-3C) anwählbaren Medienfestlegungszieles (21) in der Telekommunikationssteuereinheit (1, 1A, 1 B) zentral für das Telekommunikationssystem (4, 4A, 4B) zur Festlegung der Mediendatei (M2, M3, 27A-27E), Anwählen des Medienfestlegungszieles (21) durch eines der mehreren Telekommunikationsendgeräte (2, 2A, 2B, 3, 3A-3C) und Hinterlegen einer Verknüpfung (V1, V2, 28A-28E) zu der Mediendatei (M2, M3, 27A-27E) in der Telekommunikationssteuereinheit (1, 1 A, 1 B), wodurch die Mediendatei (M2, M3, 27A-27E) festgelegt wird, und Abrufen der Mediendatei (M2, M3, 27A-27E) gemäß der in der Telekommunikationssteuereinheit (1, 1A, 1 B) hinterlegten Verknüpfung (V1, V2, 28A-28E) über die Schnittstelle (S, SA, SB) durch die Telekommunikationssteuereinheit (1, 1 A, 1 B).

## Beschreibung

Die Erfindung betrifft ein Verfahren zum Abruf einer Mediendatei in einem Telekommunikationssystem, das eine Telekommunikationssteuereinheit und mehrere an die Telekommunikationssteuereinheit angeschlossene Telekommunikationsendgeräte umfasst. Die Erfindung betrifft ferner ein Computerprogrammprodukt zum Ausführen des Verfahrens und ein Telekommunikationssystem, das eine Telekommunikationssteuereinheit und mehrere an die Telekommunikationssteuereinheit angeschlossene Telekommunikationsendgeräte umfasst, zum Abruf der Mediendatei.

Heutige Telekommunikationssysteme können in Hardware-Form vorliegen, wie das als OpenScape Office MX der Siemens Enterprise Communications GmbH & Co.KG bekannte System zeigt, das in einem 19" Gehäuse mit vorinstallierter Software als Standalone System durch Vernetzung maximal 1.000 Telekommunikationsendgeräte als Steuereinheit miteinander verbinden kann. Ein anderes Telekommunikationssystem des gleichen Herstellers ist als OpenScape Office LX bekannt, wobei dieses System in Software-Form plattformunabhängig auf einem Linux-Server betrieben werden kann, wobei durch Vernetzung maximal 1.000 Telekommunikationsendgeräte über dieses System miteinander verbunden werden können. Mit diesen Systemen ist es möglich, eine Ansage oder eine Wartemusik, d.h. den Inhalt einer Mediendatei, beispielsweise einer Audiodatei, der einem Benutzer eines Telekommunikationsendgerätes unaufgefordert präsentiert wird, einem solchen Benutzer vorzuspielen. Hierzu kann eine Audiodatei, beispielsweise im WAV-Format oder MP3-Format lokal auf dem Telekommunikationssystem abgespeichert werden. Auch in vernetzten Systemen ist die Ansage oder Wartemusik daher lokal auf jedem der vernetzten Systeme abgespeichert, weshalb jedes Telekommunikationssystem hinsichtlich einer Ansage oder Wartemusik eingerichtet werden muss. Nachteilig an der lokalen Ablage einer oder mehrerer Audiodateien auf dem Telekommunikationssystem ist, dass bei vernetzten Telekommunikationssystemen jedes System separat hinsichtlich der Ansage oder Wartemusik eingerichtet werden muss und die Ablage der Audiodatei auf dem Telekommunikationssystem oftmals umständlich erfolgen muss, so dass lediglich ein Administrator oder Benutzer mit besonderen Kenntnissen über das Telekommunikationssystem die lokale Ablage der Audiodatei vornehmen und/oder ändern kann.

Ausgehend davon ist die Aufgabe der Erfindung, ein Verfahren zum Abruf einer Mediendatei, ein Computerprogrammprodukt zum Ausführen des Verfahrens und ein Telekommunikationssystem zum Abruf der Mediendatei bereitzustellen, mit denen die Mediendatei, deren Inhalt einem Benutzer des Telekommunikationssystems unaufgefordert präsentiert wird, auf einfache Weise auf dem Telekommunikationssystem abgelegt werden kann und mit denen auf eine solche Mediendatei in einfacher und flexibler Weise zugegriffen werden kann. Insbesondere sollen ein Verfahren, ein Computerprogrammprodukt zum Ausführen des Verfahrens und ein Telekommunikationssystem angegeben werden, mit denen es möglich ist, unterschiedliche Formate von Mediendateien einem Benutzer des Telekommunikationssystems vorzuspielen, wobei die Ablage dieser Mediendateien und der Zugriff darauf auf einfache Weise erfolgen können.

Gemäß dem erfindungsgemäßen Verfahren zum Abruf einer Mediendatei in einem Telekommunikationssystem, das eine Telekommunikationssteuereinheit und mehrere an die Telekommunikationssteuereinheit angeschlossene Telekommunikationsendgeräte umfasst, wobei ein Inhalt der abgerufenen Mediendatei über eine aufgebaute Verbindung zu einem der mehreren Telekommunikationsendgeräte einem Benutzer des Telekommunikationsendgerätes unaufgefordert präsentiert wird, ist eine Schnittstelle in der Telekommunikationssteuereinheit derart vorgesehen, dass über die Schnittstelle auf die Mediendatei, die außerhalb des Telekommunikationssystems gespeichert ist, zugegriffen werden kann. In der Telekommunikationssteuereinheit wird ein von jedem der mehreren Telekommunikationsendgeräte anwählbares Medienfestlegungsziel zentral für das Telekommunikationssystem zur Festlegung der Mediendatei eingerichtet. Das Medienfestlegungsziel wird durch eines der mehreren Telekommunikationsendgeräte angewählt und eine Verknüpfung zu der Mediendatei wird in der Telekommunikationssteuereinheit hinterlegt, wodurch die Mediendatei festgelegt wird. Die Mediendatei wird abgerufen gemäß der in der Telekommunikationssteuereinheit hinterlegten Verknüpfung über die Schnittstelle durch die Telekommunikationssteuereinheit.

Sofern von einem Benutzer eines der mehreren Telekommunikationsendgeräte eine Amtsleitung verwendet wird, um einen anderen Benutzer eines anderen Telekommunikationsendgerätes zu erreichen, sind sämtliche Telekommunikationsendgeräte, die über diese Amtsleitung und/oder ein Amt miteinander verbunden werden oder verbindbar sind, von dem erfindungsgemäßen Telekommunikationssystem umfasst. Eine Amtsleitung wird auch als Trunk bezeichnet. Insofern kann das Telekommunikationssystem neben der Telekommunikationssteuereinheit und mehreren hieran angeschlossenen Telekommunikationsendgeräten auch einen oder mehrere Trunks umfassen.

Der Inhalt der Mediendatei umfasst beispielsweise eine Ansage und/oder eine Werbemusik. Die Mediendatei kann mittels einer Start-/Stop-Funktion oder mittels einer Endlosschleife abgespielt werden. Als Mediendateien kommen neben speicherbaren Dateien auch Streams in Betracht, die dem Benutzer des Telekommunikationssystems in Echtzeit oder in Quasi-Echtzeit Informationen bereitstellen können. Unter einer Mediendatei wird im Folgenden daher jede Art von Medium verstanden, die auf einem Telekommunikationsendgerät einem Benutzer dieses Endgerätes vorgespielt werden kann. Da dem Benutzer des Endgerätes der Inhalt der Mediendatei unaufgefordert präsentiert wird, ist eine Vorauswahl des Inhaltes der Mediendatei aktiv durch den Benutzer des Endgerätes nicht erforderlich. Insbesondere ist keine Benutzerschnittstelle, auch UI (UI: User Interface) genannt, am Endgerät erforderlich, mit der der Benutzer des Endgerätes eine Auswahl oder Vorauswahl des Inhaltes der Mediendatei treffen muss. Die Auswahl der Mediendatei geschieht vielmehr vollautomatisch durch die Telekommunikationssteuereinheit anhand der in der Telekommunikationssteuereinheit hinterlegten Verknüpfung zu der Mediendatei.

Das Telekommunikationsendgerät kann als kabelgebundenes Endgerät, beispielsweise als Tischtelefon, oder als kabelloses Endgerät, beispielsweise als DECT-Telefon, Mobiltelefon, IP-Telefon, PDA (Personal Digital Assistant), PC oder Tablet-PC, der an die Telekommunikationssteuereinheit kabelgebunden oder kabellos angebunden ist, etc. ausgebildet sein. Das Telekommunikationsendgerät kann insbesondere als SIP (Session Initiation Protocol)-/ HFA (HiPath Feature Access)- oder als TDM (Time Division Multiplex)-Endgerät vorliegen. Die Schnittstelle in der Telekommunikationssteuereinheit kann als Hardware-Schnittstelle, beispielsweise als Netzwerk-Schnittstelle, z.B. als RJ-45-Schnittstelle, oder als kabellose Schnittstelle, beispielsweise als WLAN (Wireless Local Area Network)-Schnittstelle, insbesondere in einem der Formate 802.11a bis 802.11n, ausgebildet sein. Andere Ausgestaltungen der Schnittstelle sind möglich. Das Medienfestlegungsziel kann in der Telekommunikationssteuereinheit in Form einer grafischen Benutzeroberfläche eingerichtet sein, über die in der Telekommunikationssteuereinheit zentral für das Telekommunikationssystem die Mediendatei festgelegt werden kann, beispielsweise durch Auswahl der Mediendatei von einem Server, auf dem die Mediendatei lokal und/oder über den Zugriff auf ein Netzwerk, beispielsweise das Internet, abgelegt ist.

Die Mediendatei ist außerhalb des Telekommunikationssystems, d.h. nicht lokal auf dem Telekommunikationssystem, gespeichert. Da mittels Anwahl des Medienfestlegungszieles durch eines der mehreren Telekommunikationsendgeräte eine Verknüpfung zu der Mediendatei in der Telekommunikationssteuereinheit hinterlegt werden kann, und die Mediendatei gemäß dieser Verknüpfung über die Schnittstelle durch die Telekommunikationssteuereinheit abgerufen werden kann, stellt das Medienfestlegungsziel einen zentralen Einspeisepunkt für Ansagen und/oder Wartemusik, beispielsweise in Form von Informationen des Unternehmens, das der Benutzer des Telekommunikationsendgerätes über das Telekommunikationsendgerät versucht zu erreichen, dar. Weiter kann über jedes der mehreren Telekommunikationsendgeräte auf das Medienfestlegungsziel zugegriffen werden zur Auswahl der Mediendatei, die individuell für jedes der mehreren Telekommunikationsendgeräte festgelegt werden kann. Das Telekommunikationssystem wird daher um einen zentralen Einspeisepunkt für externe Ansagen und/oder Wartemusik in Form des Medienfestlegungszieles zur Hinterlegung und zum Abruf der Mediendatei erweitert. Das Medienfestlegungsziel stellt als Einspeisepunkt einen Kommunikationspartner für den Benutzer eines jeden der mehreren Telekommunikationsendgeräte dar, der von jedem dieser Telekommunikationsendgeräte angewählt und als "Koppelpunkt" für unaufgefordert einem Benutzer des Telekommunikationsendgerätes vorzuspielende Inhalte von Mediendateien, beispielsweise Ansageschaltungen, genutzt werden kann. Über die in dem Medienfestlegungsziel hinterlegten Verknüpfungen zu einer oder mehreren Mediendateien werden die Verbindungen zu den außerhalb des Telekommunikationssystems gespeicherten Mediendateien als den einzelnen Ansagezielen zur Verfügung gestellt, wenn einem Benutzer eines Telekommunikationsendgerätes der Inhalt der Mediendatei unaufgefordert präsentiert werden soll.

Die Mediendatei, deren Inhalt beispielsweise eine Ansage oder Werbemusik betrifft, kann als Audiodatei, Videodatei, Audio-Stream oder als Video-Stream vorliegen. Der Audio-Stream liegt beispielsweise als Livestream eines Internet-Radiosenders vor. Die Mediendatei kann aber auch als Video-Stream in Form eines Livestreams eines Internet-(Nachrichten- oder Fernseh-) Senders vorliegen. Die Mediendatei kann alternativ oder zusätzlich zum Internet aus einer lokalen Quelle stammen, beispielsweise von einem Server im Firmennetz der Firma, die das Telekommunikationssystem betreut. So kann die Mediendatei als Audio-Stream mit Unternehmensmeldungen oder als Video-Stream mit Untemehmensfemsehen vorliegen. Ein anderes Beispiel der Mediendatei betrifft eine außerhalb des Telekommunikationssystems gespeicherte Datei, beispielsweise die Audiodatei "GutenTag.wav". Neben einer Audiodatei ist auch eine Videodatei, beispielsweise ein Unternehmensvideo und/oder Werbung, möglich. Im Falle eines Call-Centers kann der Video-Stream ein Live-Video des Call-Centers oder Mitarbeiters des Call-Centers betreffen, der einen in einer Warteschlange befindlichen Anruf des Benutzers des Telekommunikationsendgerätes übernehmen soll. Zum Abspielen der Mediendatei in Form eines Streams kann ein sogenannter Streamreader verwendet werden. Ein Anwenderprogramm eines Streamreaders kann auf dem außerhalb des Telekommunikationssystems angeordneten Server gespeichert sein, auf dem die Mediendatei gespeichert ist. Alternativ oder zusätzlich kann das Anwenderprogramm des Streamreaders auch auf der Telekommunikationssteuereinheit und/oder einem oder mehreren der Telekommunikationsendgeräte gespeichert sein. Die Mediendatei kann nach Aufbau einer Verbindung zwischen dem Telekommunikationsendgerät und der Telekommunikationssteuereinheit dem Benutzer des Telekommunikationsendgerätes unaufgefordert präsentiert werden, wobei kein laufendes Gespräch zwischen dem Benutzer des Telekommunikationsendgerätes und einem anderen Benutzer eines Telekommunikationsendgerätes des Telekommunikationssystems erforderlich ist. Wenn beispielsweise bei einem Anruf des Benutzers des Telekommunikationsendgerätes in einem Call-Center alle Leitungen besetzt sind, kann unmittelbar nach Aufbau der Verbindung des Endgerätes des Benutzers zu dem Call-Center die Mediendatei, deren Inhalt eine Wartemusik betrifft, dem Benutzer des Telekommunikationsendgerätes vorgespielt werden. Andererseits kann während eines laufenden Gespräches zwischen dem Benutzer des Endgerätes und beispielsweise einem Mitarbeiter eines Call-Centers eine Mediendatei, deren Inhalt eine Ansage und/oder Wartemusik betrifft, dem Benutzer des Telekommunikationsendgerätes vorgespielt werden, beispielsweise im Falle einer Um- und/oder Weiterleitung des laufenden Gesprächs. Die Mediendatei kann auch zusätzlich zu einem laufenden Gespräch des Benutzers des Telekommunikationsendgerätes mit einem Benutzer eines anderen Telekommunikationsendgerätes, beispielsweise in Form eines Videos des Gesprächspartners, dem Benutzer des Telekommunikationsendgerätes vorgespielt werden.

Vorteilhafterweise wird eine dem Benutzer zuordenbare Information, die in dem Telekommunikätionssystem vor dem Abruf der Mediendatei vorliegt, zur Ermittlung eines Standortes des Benutzers ausgewertet, wobei die Mediendatei abhängig von dem ermittelten Standort des Benutzers durch Auswahl einer dem ermittelten Standort zugeordneten Verknüpfung abgerufen wird. Die dem Benutzer zuordenbare Information ist beispielsweise eine Rufnummer oder IP-Adresse. Der Standort des Benutzers kann in Form einer Adresse, auch städtische Adresse oder "civic address" genannt, in Form von Längen- und Breitengradinformationen, beispielsweise als GPS-Signal, oder in anderer Form vorliegen. Durch Auswahl der dem ermittelten Standort des Benutzers zugeordneten Verknüpfung wird die Mediendatei anhand des Standortes des Anrufers ausgewählt. Eine nette Aufmerksamkeit gegenüber einem Kunden eines Unternehmens, der als Benutzer des Endgerätes das Telekommunikationssystem des Unternehmens anwählt, ist es, aufgrund der Telefonnummer des Benutzers auf seinen Standort zu schließen und einen Livestream eines örtlichen Radiosenders dem Benutzer vorzuspielen. In diesem Fall liegt also die dem Benutzer zuordenbare Information als Telefonnummer vor und die Mediendatei wird als Livestream des örtlichen Radiosenders gemäß dem ermittelten Standort des Benutzers abgerufen und dem Benutzer vorgespielt.

Im Falle der dem Benutzer zuordenbaren Information als Rufnummer kann diese Information von dem Telekommunikationsendgerät an die Telekommunikationssteuereinheit übermittelt werden, beispielsweise mittels CLIP (Calling Line Identification Presentation, Rufnummernanzeige), wenn der Benutzer das Telekommunikationsendgerät verwendet. Alternativ kann die dem Benutzer zuordenbare Information an die Telekommunikationssteuereinheit vor und/oder nach einer Verwendung des Telekommunikationsendgerätes durch den Benutzer, d.h. unabhängig von einer Verwendung des Telekommunikationsendgerätes des Benutzers, übermittelt werden.

Erfindungsgemäß ist vorgesehen, dass ein Präsenzserver an die Telekommunikationssteuereinheit angeschlossen wird, wobei die dem Benutzer zuordenbare Information von der Telekommunikationssteuereinheit oder von dem Telekommunikationsendgerät an den Präsenzserver übermittelt wird, die dem Benutzer zuordenbare Information zur Ermittlung des Standortes des Benutzers von dem Präsenzserver ausgewertet wird, und eine Information über den ermittelten Standort von dem Präsenzserver an die Telekommunikationssteuereinheit übermittelt wird. Der Präsenzserver kann als Standalone-Einheit oder in die Telekommunikationssteuereinheit integriert vorliegen. Der Präsenzserver kann neben der Übermittlung von Informationen über den ermittelten Standort des Benutzers an die Telekommunikationssteuereinheit andere Einheiten mit Standortinformationen versorgen. Beispielsweise kann der Präsenzserver den Aufenthaltsort eines Mitarbeiters oder die Aufenthaltsorte mehrerer Mitarbeiter des Unternehmens ermitteln, das das Telekommunikationssystem betreibt, beispielsweise in Bereichen des Unternehmens mit erhöhter Sicherheitsstufe. Der Präsenzserver kann die dem Benutzer zuordenbare Information direkt von dem Telekommunikationsendgerät des Benutzers übermittelt bekommen, wodurch der Umweg der Übermittlung dieser Information vom Telekommunikationsendgerät über die Telekommunikationssteuereinheit an den Präsenzserver vermieden wird.

Durch die Ermittlung des Standortes des Benutzers des Telekommunikationssystems und den Abruf der Mediendatei abhängig von dem ermittelten Standort des Benutzers durch Auswahl einer dem ermittelten Standort zugeordneten Verknüpfung ist es möglich, dass einem Benutzer des Telekommunikationsendgerätes aufgrund seiner Telefonnummer als diesem Benutzer zuordenbare Information ein abgerufener Livestream eines örtlichen Radiosenders gemäß dem ermittelten Standort des Benutzers vorgespielt wird. Ein Anrufer aus München hört z.B. als Wartemusik den bayrischen Rundfunk, während ein Anrufer aus Köln Lokalnachrichten des WDR (Westdeutscher Rundfunk) vorgespielt bekommt. Alternativ oder zusätzlich kann die ortsabhängige Auswahl der Mediendatei dahingehend erfolgen, dass Werbebotschaften von Unternehmen, die am Standort oder in der Nähe des Standortes des Benutzers des Telekommunikationsendgerätes ansässig sind, als Inhalt einer Mediendatei dem Benutzer vorgespielt werden. Die vorliegende Erfindung ermöglicht daher, eine benutzerspezifische Ansprache von dem Benutzer unaufgefordert zu präsentierenden Inhalten beispielsweise als benutzerspezifische Plattform für Werbebotschaften von Drittanbietern.

Die Mediendatei kann auf einem über die Schnittstelle mit der Telekommunikationssteuereinheit verbundenen Medienserver außerhalb des Telekommunikationssystems gespeichert werden. Der Medienserver kann als Cloud im Internet oder als Server in einem LAN/WAN (WAN: Wide Area Network) vorliegen. Prinzipiell ist jede Form von Server, die über die Schnittstelle in der Telekommunikationssteuereinheit mit dem Telekommunikationssystem verbunden werden kann, zur Ausführung des erfindungsgemäßen Verfahrens geeignet.

Die Verknüpfung kann als Link, insbesondere URL (Uniform Resource Locator) oder als Netzwerkpfad in der Telekommunikationssteuereinheit hinterlegt werden. Eine URL als "einheitlicher Quellenanzeiger" identifiziert und lokalisiert eine Ressource, z.B. eine Website, über die zu verwendende Zugriffsmethode, beispielsweise das verwendete Netzwerkprotokoll wie HTTP (Hypertext Transfer Protocol) oder FTP (File Transfer Protocol) und den Ort der Ressource in Computernetzwerken. Aufgrund der Hinterlegung von Verknüpfungen zu der Mediendatei in der Telekommunikationssteuereinheit wird eine Abspeicherung der Mediendatei lokal in der Telekommunikationssteuereinheit vermieden. Mit der vorliegenden Erfindung ist es möglich, dass zusätzlich zu der Hinterlegung von Verknüpfungen zu außerhalb des Telekommunikationssystems gespeicherten Mediendateien andere Mediendateien lokal auf der Telekommunikationssteuereinheit gespeichert sind. Eine gemischte Nutzung von Mediendateien, deren Inhalt einem Benutzer eines Telekommunikationsendgerätes des Telekommunikationssystems unaufgefordert präsentiert werden soll, bei der lokal gespeicherte als auch extern gespeicherte Mediendateien von der Telekommunikationssteuereinheit abgerufen werden, ist somit möglich.

Zwischen der Telekommunikationssteuereinheit und dem Telekommunikationsendgerät kann ein Trunk als Amtsleitung angeordnet sein, der als ITSP (Internet Telephony Service Provider)-, ISDN (Integrated Services Digital Network)-, HKZ (Hauptanschlusskennzeichen)-, SIP-Q-, SIP-, oder CorNet-NQ (CorNet: Corporate Networking) Trunk vorliegen kann.

Das Medienfestlegungsziel in der Telekommunikationssteuereinheit kann unter Verwendung des Netzwerkprotokolls SIP oder MGCP (Media-Gateway-Control-Protocol) angewählt werden. Das Media-Gateway-Control-Protocol ist ein Netzwerk-Protokoll zur Steuerung von VoIP-Gateways (VoIP: Voice over IP). MGCP ist ein Master-Slave-Protokoll, das Steuerinformationen in Klartext - wie SIP - überträgt. Das VoIP-Gateway arbeitet hierbei als Slave und wird von einer Vermittlungseinheit, beispielsweise der Telekommunikationssteuereinheit, gesteuert.

Das Telekommunikationssystem kann an ein weiteres Telekommunikationssystem angeschlossen werden, wobei das Medienfestlegungsziel in der Telekommunikationssteuereinheit zentral für das Telekommunikationssystem und das weitere Telekommunikationssystem zur Festlegung von außerhalb des Telekommunikationssystems gespeicherten Mediendaten eingerichtet wird. Durch die Festlegung von Mediendateien über das Medienfestlegungsziel zentral für das Telekommunikationssystem und/oder das weitere Telekommunikationssystem können Ansagen und andere unaufgefordert zu präsentierende Inhalte zentral für einen oder mehrere Standorte verwaltet werden. Eine Verwaltung von Ansagen kann so von jedem der an das Telekommunikationssystem und/oder an das weitere Telekommunikationssystem angeschlossenen Telekommunikationsendgeräte ausgeführt werden. Ansagen und andere unaufgefordert zu präsentierende Inhalte können zudem außerhalb einer Switch-Konfiguration oder außerhalb des Firmennetzes verwaltet werden. Durch die für ein Telekommunikationssystem und/oder ein weiteres Telekommunikationssystem zentrale Administration von Ansagen und anderen unaufgefordert zu präsentierenden Inhalten können die Administrationskosten gesenkt werden. Die Administration der Ansagen und anderen unaufgefordert zu präsentierenden Inhalte kann bei Bedarf einem internen oder externen Dienstleister für das Unternehmen, das das Telekommunikationssystem und/oder das weitere Telekommunikationssystem betreibt, übertragen werden.

Die Verknüpfung zu der außerhalb des Telekommunikationssystems gespeicherten Mediendatei kann in der Telekommunikationssteuereinheit für mehrere Telekommunikationsendgeräte hinterlegt werden. Alternativ oder zusätzlich kann die zu einem Zeitpunkt unaufgefordert zu präsentierende Mediendatei durch Hinterlegen mehrerer Verknüpfungen zu jeweils unterschiedlichen Mediendateien in der Telekommunikationssteuereinheit festgelegt werden. Beispielsweise kann für ein einzelnes Telekommunikationsendgerät für unterschiedliche Standorte jeweils eine Mediendatei mittels unterschiedlicher Verknüpfungen in der Telekommunikationssteuereinheit festgelegt werden. Auf die unterschiedlichen Mediendateien abhängig vom Standort eines Benutzers eines der Endgeräte des Telekommunikationssystems können wiederum mehrere der Telekommunikationsendgeräte mittels Hinterlegung einer Verknüpfung zugreifen. Unterschiedliche Verknüpfungen auf unterschiedliche Mediendateien mit gleichem Inhalt erlauben eine erhöhte Ausfallsicherheit im Fall des Ausfalls einer der Verknüpfungen. Da mehrere Telekommunikationssysteme im Netzverbund oder lokal auf das Medienfestlegungsziel mittels Hinterlegung von Verknüpfungen zugreifen können, ist eine für ein oder mehrere Telekommunikationssysteme zentralisierte Einrichtung und Pflege von Ansagen und anderen unaufgefordert zu präsentierenden Inhalten möglich. Hierbei kann das Medienfestlegungsziel in der Telekommunikationssteuereinheit unter Verwendung einer internen Steuereinheit oder einer externen Steuereinheit, insbesondere einer CTI-Steuereinheit (CTI: Computer Telephony Integration), ausgewählt werden. Als interne Steuereinheit kommt eine Steuereinheit, die auf einem oder mehreren der Telekommunikationsendgeräte und/oder auf der Telekommunikationssteuereinheit ausgeführt wird, in Betracht. CTI ist eine Verknüpfung von Telekommunikation mit elektronischer Datenverarbeitung, wobei es CTI ermöglicht, aus Computerprogrammen heraus einen automatischen Aufbau einer Annahme und/oder Beendigung von Telefongesprächen, einen Aufbau von Telefonkonferenzen, ein Senden und Empfangen von Faxnachrichten, Telefonbuchdiensten, sowie eine Weitervermittlung von Gesprächen auszuführen.

Die Erfindung betrifft weiter ein Computerprogrammprodukt zum Ausführen des erfindungsgemäßen Verfahrens. Das Computerprogrammprodukt kann in Form einer Diskette, einer DVD (Digital Versatile Disc), einer CD (Compact Disc), einem Speicherstick, oder einem anderen Speichermedium vorliegen. Das Computerprogrammprodukt kann auf einem Server installiert sein, wobei der Server die Telekommunikationssteuereinheit umfassen kann.

Die Erfindung betrifft weiter ein Telekommunikationssystem, das eine Telekommunikationssteuereinheit und mehrere an die Telekommunikationssteuereinheit angeschlossene Telekommunikationsendgeräte umfasst, zum Abruf einer Mediendatei, wobei ein Inhalt der abgerufenen Mediendatei über eine aufgebaute Verbindung zu einem der mehreren Telekommunikationsendgeräte einem Benutzer des Telekommunikationsendgerätes unaufgefordert präsentierbar ist. Das Telekommunikationssystem umfasst eine Schnittstelle in der Telekommunikationssteuereinheit, die derart ausgeführt ist, dass über die Schnittstelle auf die Mediendatei, die außerhalb des Telekommunikationssystems gespeichert ist, zugegriffen werden kann. Das Telekommunikationssystem umfasst weiter eine Medienfestlegungszieleinheit, die derart ausgeführt ist, dass von jedem der mehreren Telekommunikationsendgeräte ein Medienfestlegungsziel anwählbar ist, das in der Telekommunikationssteuereinheit zentral für das Telekommunikationssystem derart eingerichtet ist, dass die Mediendatei festlegbar ist, wobei die Telekommunikationssteuereinheit derart eingerichtet ist, dass, wenn das Medienfestlegungsziel durch eines der mehreren Telekommunikationsendgeräte angewählt ist, eine Verknüpfung zu der Mediendatei in der Telekommunikationssteuereinheit hinterlegbar ist, wodurch die Mediendatei festgelegt ist, und die Mediendatei gemäß der in der Telekommunikationssteuereinheit hinterlegten Verknüpfung über die Schnittstelle durch die Telekommunikationssteuereinheit abrufbar ist. Die Medienfestlegungszieleinheit kann als RTP-Quelle (RTP: Realtime Transport Protocol) vorliegen. Die zu dem erfindungsgemäßen Verfahren ausgeführten Vorteile, Effekte und Ausführungsformen treffen in entsprechender Weise für das erfindungsgemäße Telekommunikationssystem zu. Daher können mit dem erfindungsgemäßen Telekommunikationssystem Ansagen und andere unaufgefordert zu präsentierende Inhalte zentral für einen oder mehrere Standorte verwaltet werden. Weiter können Ansagen und andere unaufgefordert zu präsentierende Inhalte außerhalb der Switch-Konfiguration oder des Firmennetzes verwaltet werden. Ein oder mehrere Telekommunikationssysteme im Netzverbund oder lokal können über die gemeinsame Medienfestlegungszieleinheit auf außerhalb des einen oder der mehreren Telekommunikationssysteme gespeicherte Mediendateien zugreifen, wodurch eine zentralisierte Einrichtung und Pflege der Ansagen und anderen unaufgefordert zu präsentierenden Inhalte für das eine oder die mehreren Telekommunikationssysteme möglich ist.

Weitere Ausführungsbeispiele sowie Vorteile der Erfindung werden nachfolgend anhand der Figuren erläutert. Zur besseren Anschaulichkeit wird in den Figuren auf eine maßstabs- oder proportionsgetreue Darstellung verzichtet. In den Figuren bezeichnen, sofern nicht anders angegeben, gleiche Bezugszeichen gleiche Bauteile mit gleicher Bedeutung. Es zeigen:
Fig. 1a bis 1c unterschiedliche Ausführungsformen des erfindungsgemäßen Telekommunikationssystems mit einem außerhalb des Telekommunikationssystems angeordneten Medienserver,
Fig. 2 eine grafische Benutzeroberfläche mit dem erfindungsgemäßen Medienfestlegungsziel, in dem mehrere Verknüpfungen zu jeweils einer Mediendatei hinterlegt sind,
Fig. 3 eine schematische Darstellung der Medienfestlegungszieleinheit in einer Ausführungsform als RTP-Quelle mit unterschiedlichen Eingangsquellen,
Fig. 4 ein Ablaufdiagramm zum Abruf der Mediendatei in dem Telekommunikationssystem in einer Ausführungsform, und
Fig. 5 eine erfindungsgemäße Anordnung aus einem Telekommunikationssystem mit einem außerhalb des Telekommunikationssystems angeordneten Medienserver und einem Präsenzserver.

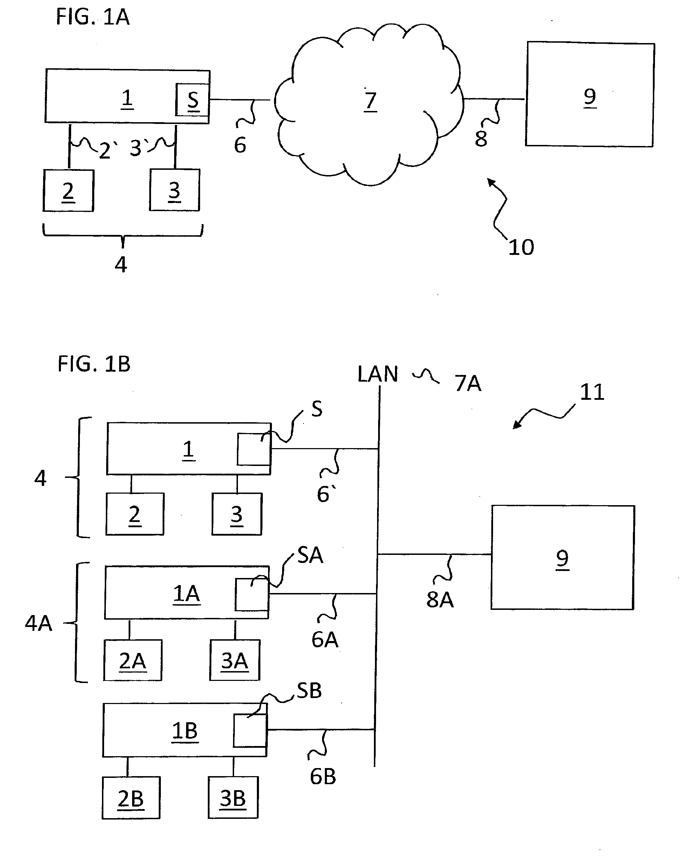

In Fig. 1a ist das erfindungsgemäße Telekommunikationssystem in einer ersten Ausführungsform dargestellt. Eine Telekommunikationssteuereinheit 1 umfasst eine Schnittstelle S, über die auf eine Mediendatei (nicht dargestellt), die außerhalb des Telekommunikationssystems 4 auf einem Medienserver 9 gespeichert ist, zugegriffen werden kann. Gemäß der in Fig. 1a dargestellten Anordnung 10 ist der Medienserver 9 über die Verbindung 6, das Netzwerk 7 und die Verbindung 8 an die Schnittstelle S der Telekommunikationssteuereinheit 1 angeschlossen. Das Telekommunikationssystem 4 umfasst neben der Telekommunikationssteuereinheit 1 zwei Endgeräte 2, 3, wobei das Telekommunikationsendgerät 2 über die Verbindung 2' und das Telekommunikationsendgerät 3 über die Verbindung 3' an die Telekommunikationssteuereinheit 1 angeschlossen sind. Der Medienserver 9 kann als Teil einer Cloud im Internet oder als lokaler Server in einem LAN/WAN ausgeführt sein. Die Telekommunikationssteuereinheit ist beispielsweise als OpenScape Office MX oder als OpenScape Office LX ausgeführt. Die Verbindungen 2', 3', 6, 8 können kabelgebunden als Festnetzverbindungen oder kabellos als Funkverbindungen ausgeführt sein. Mischformen aus kabelgebundenen oder kabellosen Verbindungen sind möglich. In der Telekommunikationssteuereinheit ist ein von jedem der Telekommunikationsendgeräte 2, 3 anwählbares Medienfestlegungsziel (nicht dargestellt) eingerichtet zentral für das Telekommunikationssystem 4 zur Festlegung der Mediendatei. Das Medienfestlegungsziel wird durch eines der Telekommunikationsendgeräte 2, 3 angewählt und eine Verknüpfung (nicht dargestellt) zu der Mediendatei wird in der Telekommunikationssteuereinheit 1 hinterlegt, wodurch die Mediendatei festgelegt wird. Danach wird die Mediendatei gemäß der in der Telekommunikationssteuereinheit 1 hinterlegten Verknüpfung über die Schnittstelle S durch die Telekommunikationssteuereinheit 1 abgerufen. Die Verknüpfung kann als URL in dem Medienfestlegungsziel in der Kommunikationssteuereinheit 1 hinterlegt sein, wobei die URL über die Verbindung 6, das Netzwerk 7 und die Verbindung 8 auf die auf dem Medienserver 9 hinterlegte Mediendatei zugreift. Bei Präsentation des Inhaltes der Mediendatei wird die Mediendatei auf dem Medienserver 9 durch die Telekommunikationssteuereinheit 1 über die Verbindung 6, das Netzwerk 7 und die Verbindung 8 von dem Medienserver 9 abgerufen und über die Verbindung 2' an das Telekommunikationsendgerät 2 und/oder über die Verbindung 3' an das Telekommunikationsendgerät 3 übermittelt. Der Inhalt der Mediendatei wird einem Benutzer des Telekommunikationsendgerätes 2 und/oder einem Benutzer des Telekommunikationsendgerätes 3 unaufgefordert durch Abruf der Mediendatei von dem Medienserver 9 präsentiert. Zum Zeitpunkt des Abrufes der Mediendatei von dem Medienserver 9 ist die Verbindung 2' und/oder die Verbindung 3' von dem Telekommunikationsendgerät 2 und/oder dem Telekommunikationsendgerät 3 zu der Telekommunikationssteuereinheit 1 aufgebaut. Als Telekommunikationsendgeräte kommen OpenStage Endgeräte der Siemens Enterprise Communications GmbH & Co. KG in Betracht. Ein anderes Endgerät, beispielsweise ein Mobiltelefon, ein IP-Telefon oder ein anderes kabelgebundenes oder kabellos an die Telekommunikationssteuereinheit angebundenes Endgerät ist alternativ oder zusätzlich möglich. Der Medienserver 9 kann als Audioserver, Video-Server oder kombinierter Audio-/Video-Server ausgeführt sein.

In Fig. 1b ist eine Ausführungsform der Erfindung mit mehreren Telekommunikationssystemen 4, 4A in einem Anlagenverbund dargestellt, wobei die Telekommunikationssysteme 4, 4A an einen zentralen Medienserver 9 angeschlossen sind. Im Gegensatz zur Anordnung 10 aus dem Telekommunikationssystem 4 und dem Medienserver 9 ist in Fig. 1b ein Anlagenverbund aus mehreren Telekommunikationssystemen 4, 4A dargestellt, die über ein LAN 7A an den Medienserver 9 jeweils angeschlossen sind. Das Telekommunikationssystem 4 ist über die Schnittstelle S, die Verbindung 6', das LAN 7A und die Verbindung 8A an den Medienserver 9 angeschlossen. Daneben ist das Telekommunikationssystem 4A, das eine Telekommunikationssteuereinheit 1A mit einer Schnittstelle SA, an die Endgeräte 2A, 3A jeweils angeschlossen sind, mit dem LAN 7A über die Verbindung 6A verbunden. Das Telekommunikationssystem 4A ist über die Verbindung 6A, das LAN 7A und die Verbindung 8A wie das Telekommunikationssystem 4 an den Medienserver 9 angeschlossen. Weitere Telekommunikationssysteme können über das LAN 7A und die Verbindung 8A an den Medienserver 9 angeschlossen sein. In der in Fig. 1b gezeigten Anordnung 11 ist beispielsweise ein weiteres Telekommunikationssystem, das eine Telekommunikationssteuereinheit 1B mit einer Schnittstelle SB und Endgeräte 2B, 3B, die an die Telekommunikationssteuereinheit 1B angeschlossen sind, umfasst, beispielhaft dargestellt. Dieses Telekommunikationssystem ist über die Verbindung 6B an das LAN 7A angeschlossen. Der Medienserver 9 ist als Audio-Server ausgeführt, wobei jedes Telekommunikationssystem 4, 4A einen gleichen Audio-Stream, der auf dem Audio-Server 9 als Mediendatei gespeichert ist, empfängt, wenn einem Benutzer der Telekommunikationsendgeräte 2, 3, 2A, 3A, 2B, 3B, der Inhalt des Audio-Streams unaufgefordert präsentiert werden soll. Anstelle eines Audio-Streams kann auch ein Video-Stream über eine Verknüpfung, beispielsweise in Form einer URL von der Telekommunikationssteuereinheit 1, 1A, 1B von dem Medienserver 9 über die Verbindung 8A und das LAN 7A abgerufen werden. Als Streams werden Audio- und/oder Video-Dateien bezeichnet, die aus einem Rechnernetz empfangen und gleichzeitig wiedergegeben werden. Den Vorgang der Datenübertragung selbst nennt man Streaming, wobei neben der Datei auch der Inhalt des Streams als Livestream oder Stream bezeichnet wird.

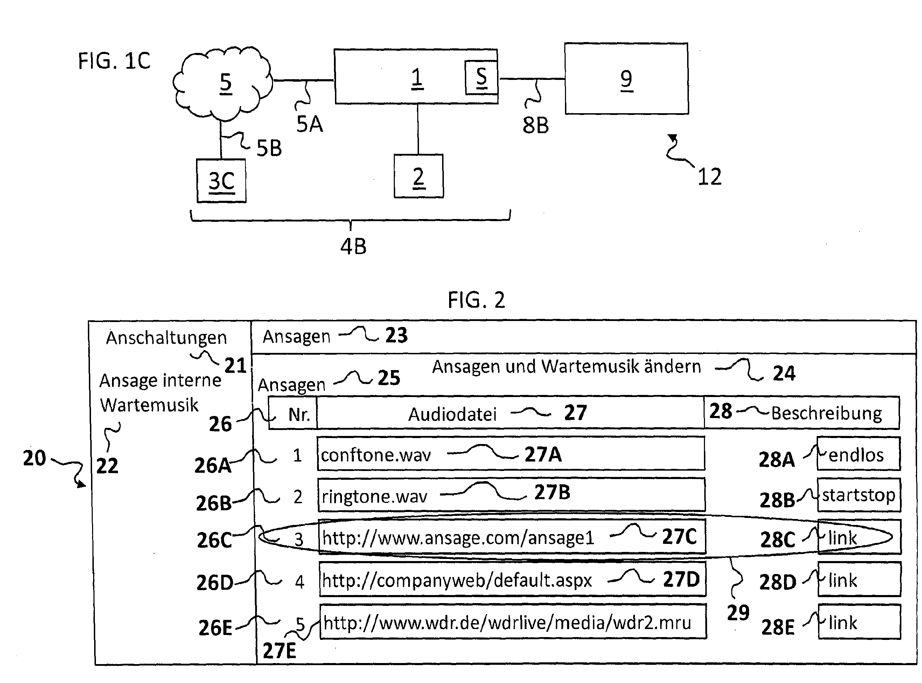

In Fig. 1c ist als weitere Ausführungsform der Erfindung eine Anordnung 12 aus einem Telekommunikationssystem 4B und einem Medienserver 9 dargestellt, der über eine Verbindung 8B an das Telekommunikationssystem 4B angeschlossen ist. Das Telekommunikationssystem 4B umfasst die Telekommunikationssteuereinheit 1 mit der Schnittstelle S, über die die Verbindung 8B zu dem Medienserver 9 aufgebaut wird. An die Telekommunikationssteuereinheit 1 ist ein Endgerät 2 direkt angeschlossen. Daneben ist an die Telekommunikationssteuereinheit 1 über die Verbindung 5A das Amt 5, auch CO (Central Office) genannt, und die Verbindung 5B das weitere Telekommunikationsendgerät 3C angeschlossen. Das Telekommunikationssystem 4B umfasst daher eine Amtsleitung, die aus der Verbindung 5A, dem Amt 5 und der Leitung 5B gebildet ist. Die Amtsleitung 5A, 5, 5B wird auch als Trunk bezeichnet. Telekommunikationsendgeräte 2, 3C können über einen Trunk oder mehrere Trunks mit der Telekommunikationssteuereinheit 1 verbunden sein. Es ist auch möglich, dass die Telekommunikationssteuereinheit 1 ausschließlich über Trunks mit den Telekommunikationsendgeräten 2, 3C verbunden ist. Mischverbindungen aus lokalen Verbindungen und Trunks sind möglich. Bei der in Fig. 1c gezeigten Anordnung 12 ist ein Benutzer des Telekommunikationsendgerätes 2, das direkt an die Telekommunikationssteuereinheit 1 angebunden ist, ein interner Benutzer/Anrufer. Demgegenüber ist ein Benutzer des Endgerätes 3C, das über die Amtsleitung 5B, 5, 5A an die Telekommunikationssteuereinheit 1 angebunden ist, ein externer Benutzer/Anrufer. Trotz des Begriffs "extern" für den Benutzer des Endgerätes 3C ist das Telekommunikationsendgerät 3C von dem Telekommunikationssystem 4B wie das Telekommunikationsendgerät 2 umfasst. Der Medienserver 9, der über die Verbindung 8B an die Telekommunikationssteuereinheit 1 angebunden ist, ist von dem Telekommunikationssystem 4B nicht umfasst. Um von dem Telekommunikationssystem 4B umfasst zu sein, müsste der Medienserver 9 als Telekommunikationsendgerät 2, 3C ausgeführt sein. Dies ist bei Medienservern nicht gegeben, weil über einen Medienserver keine Telekommunikationsverbindung im Sinne einer Echtzeit-Duplex-Verbindung zu der Kommunikationssteuereinheit 1 aufgebaut werden kann. Stattdessen steht der Medienserver 9 als Speicherort und Quelle für Mediendateien der Telekommunikationssteuereinheit 1 zur Verfügung, die mittels einer Verknüpfung auf eine auf den Medienserver 9 gespeicherte Mediendatei zugreifen kann. Sofern die Mediendatei auf der Telekommunikationssteuereinheit 1 und/oder einem der Telekommunikationsendgeräte 2, 3C gespeichert ist, ist die Mediendatei lokal und nicht außerhalb des Telekommunikationssystems 4B auf dem Telekommunikationssystem 4B gespeichert.

In Fig. 2 ist eine grafische Benutzeroberfläche 20 dargestellt, die das Medienfestlegungsziel 21 in Form des Begriffs "Anschaltungen" umfasst. Das Medienfestlegungsziel 21 umfasst das Menü 22, in dem eine Ansage und/oder eine interne Wartemusik zentral für das Telekommunikationssteuersystem 4, 4A, 4B von jedem der mehreren Telekommunikationsendgeräte 2, 2A, 2B, 3, 3A bis 3C zur Festlegung einer Mediendatei angewählt werden können. Im vorliegenden Ausführungsbeispiel werden Verknüpfungen 27A bis 27E für unterschiedliche Ansagen 23 einem Betrachter der grafischen Benutzeroberfläche 20 dargestellt. Neben dem Menü für Ansagen 23 ist ein weiteres Menü beispielsweise zur Festlegung einer Türsprechstelle (nicht dargestellt) über das Medienfestlegungsziel 21 aufrufbar. Das Menü für Ansagen 23 umfasst das Untermenü 24 über das eine Ansage und/oder Wartemusik veränderbar ist. Eine Ansage 25 oder Wartemusik umfasst hierbei jeweils eine Nummer 26, eine Audiodatei 27 und eine Beschreibung 28. Anstelle einer Audiodatei 27 kann eine Videodatei (nicht dargestellt) als Ansage und/oder Wartemusik hinterlegt werden. Eine erste Ansage 26A umfasst eine WAV-Audiodatei, die als Konferenzton im Falle einer Konferenz endlos, 28A, abgespielt wird. Eine zweite Ansage 26B umfasst einen Rückrufton in Form einer WAV-Datei, die im Gegensatz zur Ansage 26A nicht endlos abgespielt wird, sondern mittels einer Start- und Stop-Funktion abgespielt wird, 28B. Die Ansagen 26A und 26B können lokal auf dem Telekommunikationssystem 4, 4A, 4B abgespeichert sein oder außerhalb des Telekommunikationssystems 4, 4A, 4B auf dem Medienserver 9 abgespeichert sein. Neben den Verknüpfungen 27A und 27B zu den entsprechenden Dateien ist in einer weiteren Ansage 26C eine Verknüpfung 27C zu einer Ansagedatei dargestellt. Die Ansagedatei ist als Link 28C aus dem Internet abrufbar. Eine andere Art von Verknüpfung ist bei der Ansage 26B hinterlegt. Die dortige Verknüpfung 27D führt zu einer lokal auf einem Server gespeicherten Datei, die auch im Falle eines Ausfalls des Internets von einem lokalen Server abrufbar ist. Wie die Ansagedatei der Ansage 26C ist auch die Datei "default" als Link 28D ausgeführt. Eine weitere Ansage 26E umfasst eine Verknüpfung 27E zu einem Livestream des Westdeutschen Rundfunks (WDR). Diese Verknüpfung ist als URL aus dem Internet abrufbar, wobei die Verknüpfung insbesondere dann aufgerufen wird, wenn ein Benutzer eines Telekommunikationsendgerätes des Telekommunikationssystems 4, 4A, 4B einen Standort aufweist, der im Sendegebiet des Westdeutschen Rundfunks liegt. Hierzu wird eine dem Benutzer zuordenbare Information, beispielsweise eine Rufnummer, von dem Endgerät an die Telekommunikationssteuereinheit 1, 1A, 1B übermittelt und die Verknüpfung 27E wird von der Telekommunikationssteuereinheit 1, 1A, 1B abgerufen und die mit der Verknüpfung 27E verknüpfte Mediendatei wird von dem Medienserver 9 an das Endgerät des Benutzers übermittelt, wenn von der Telekommunikationssteuereinheit 1 festgestellt ist, dass der Standort des Benutzers im Sendegebiet des Westdeutschen Rundfunks liegt. Im in Fig. 2 dargestellten Ausführungsbeispiel wird über die Verknüpfung 27E der Sender "WDR2" als Link 28E vom Medienserver 9 abgerufen. Anstelle einer URL 27C, 27D, 27E kann ein Netzwerkpfad, beispielsweise in Form einer IP-Adresse, zum Abruf der Mediendatei verwendet werden.

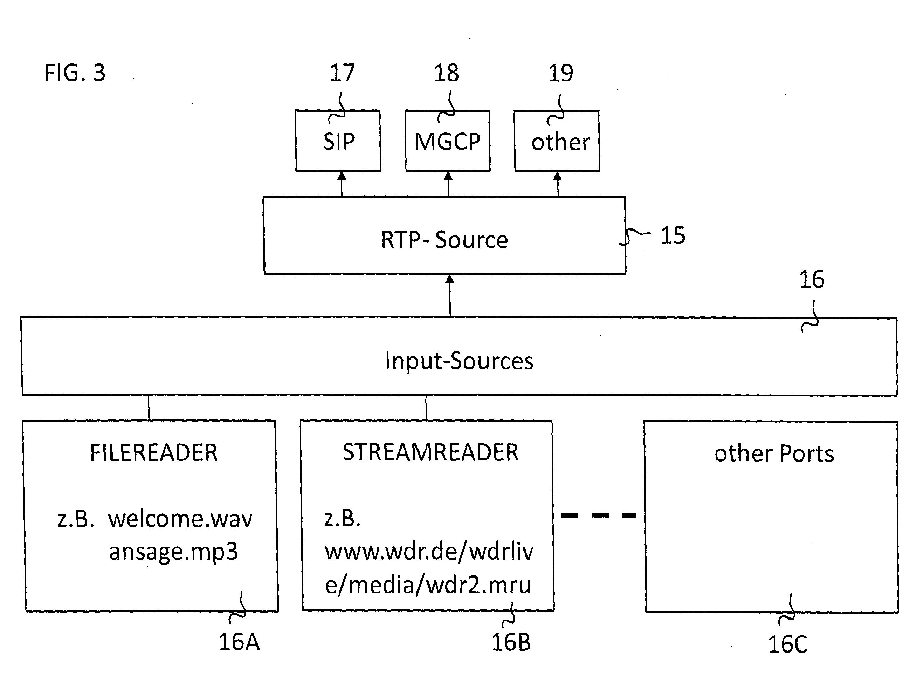

In Fig. 3 ist eine Anordnung aus einer Medienfestlegungszieleinheit 15 in Form einer RTP-Quelle mit zugehörigen Eingangsquellen 16 dargestellt. Die Medienfestlegungszieleinheit umfasst als Quelle eine Realtime Transport Protocol-Quelle (RTP-Source) 15, wobei RTP ein Protokoll zur kontinuierlichen Übertragung von audiovisuellen Daten, insbesondere Streams, über IP-basierte Netzwerke darstellt. Als Eingangsquellen 16, im Englischen Input-Sources genannt, kommen ein Filereader 16A, ein Streamreader 16B oder Quellen an anderen Ports 16C in Betracht. Der Filereader 16A kann Ansagen im WAV-Format und/oder MP3-Format wiedergeben. Der Streamreader 16B gibt beispielsweise die Ansage 26E gemäß der Verknüpfung 27E, die in Fig. 2 dargestellt ist, wieder. Das Medienfestlegungsziel in der Medienfestlegungszieleinheit 15 wird unter Verwendung des Netzwerkprotokolls SIP, 17, MGCP, 18, oder mittels eines anderen Protokolls 19 angewählt. Die Anwahl kann über ein Telekommunikationsendgerät, das als SIP-/HFA- oder TDM-Endgerät ausgeführt ist, erfolgen. Neben dem offenen Standard für SIP-Sprachkommunikation ist HFA als herstellerspezifisches Protokoll der Siemens Enterprise Communications GmbH & Co. KG bekannt. Sofern zwischen einem Telekommunikationsendgerät und der Telekommunikationssteuereinheit 1, 1A, 1B ein Trunk angeordnet ist, kann dieser als ITSP-, ISDN-, HKZ-, SIP-Q-, SIP- oder CorNet-NQ-Trunk vorliegen. Ein Internet Telephony Service Provider (ITSP) verbindet mittels eines Gateway das Internet mit einem regulären Telefonnetz. Das SIP-Q-Protokoll bezieht sich auf SIP-Signalisierungen mittels des QSIG-Protokolls, wobei QSIG ein in der Telekommunikation auf ISDN basierendes Signalisierungsprotokoll für die Vernetzung von Telefonanlagen ist. SIP-Q verwendet Lotus Sametime Unified Telephony CorNet-NQ-Erweiterungen, auch Extensions genannt, und wird für die Verknüpfung unterschiedlicher Systeme verwendet, die von sich aus SIP-Signalisierungen nicht unterstützen. CorNet mit der Protokollvariante CorNet-NQ ist ein von der Firma Siemens entwickeltes ISDN-Netzwerkprotokoll für Telefonanlagen. Im Gegensatz zum Protokoll QSIG sind in CorNet sämtliche herstellerspezifischen Leistungsmerkmale integriert. Dennoch kommt QSIG für eine End-to-End-Signalisierung zur Anwendung, da QSIG eine vollständige Tunnelung des CorNet-Protokolls erlaubt. Demgegenüber bezeichnet HKZ ein Hauptanschlusskennzeichen als Bezeichnung für das Signalisierungsverfahren bei analogen Telefonleitungen des deutschen Telefonnetzes. Als Wahlverfahren werden bei HKZ das Impulswahlverfahren und das Mehrfrequenzwahlverfahren eingesetzt.

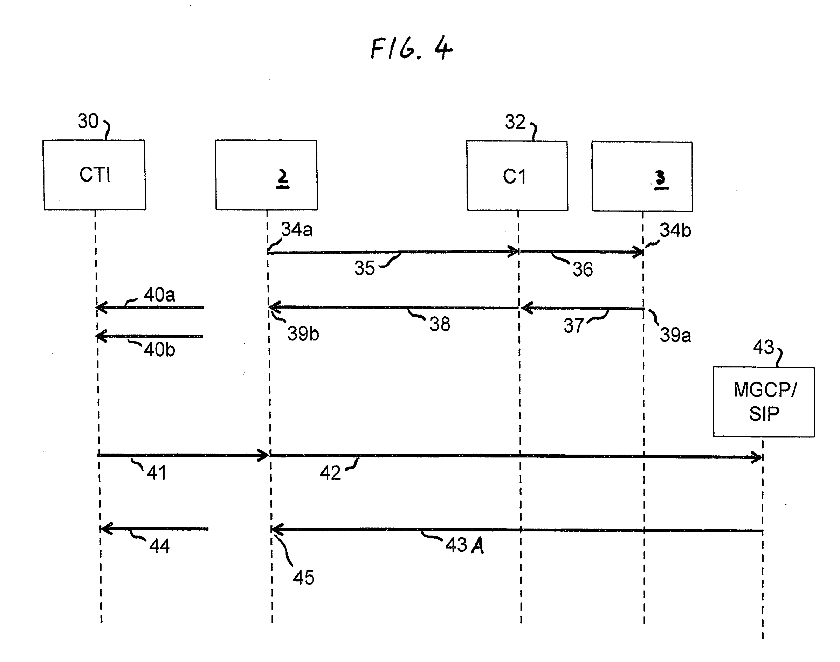

In Fig. 4 ist ein Ablaufdiagramm zum Abruf einer Mediendatei mit dem Inhalt einer Ansage 45 gemäß dem erfindungsgemäßen Verfahren dargestellt. Das Telekommunikationsendgerät 2, das alternativ als Trunk ausgeführt sein kann, und das Telekommunikationsendgerät 3, das als UCD-Endgerät (UCD: Uniform Call Distribution, auch universelle Anrufumleitung genannt) ausgeführt sein kann, befinden sich jeweils im Zustand Ruhe, 34A, 34B. Das Leistungsmerkmal UCD bewirkt, dass ein ankommender interner oder externer Ruf automatisch dem Endgerät eines Teilnehmers einer UCD-Gruppe (Agent) zugeteilt wird, das sich am längsten in Ruhe befand. Sind alle Teilnehmerendgeräte einer UCD-Gruppe belegt, werden die zusätzlich ankommenden Rufe in Wartestellung gebracht und anschließend in Abhängigkeit von Priorität und Wartezeit an die Endgeräte der Gruppenteilnehmer verteilt. UCD-Endgeräte können beispielsweise im Rahmen von ACD (Automatic Call Distribution) mit den Telefonanlagen HiPath 3000 oder OpenScape Office der Siemens Enterprise Communications GmbH & Co. KG mit dem Leistungsmerkmal UCD betrieben werden. Dem Anrufer, der sich in einem Zustand in einer Warteschlange befindet, können Ansagen oder Musik eingespielt werden. Mit dem folgenden Belegungswunsch 35 durch das Endgerät 2 wird das Endgerät 3 angereizt, 36. Das Endgerät 2 und das Endgerät 3 quittieren diesen Belegungswunsch, 37, 38, und wechseln daraufhin jeweils in den Rufzustand, 39a, 39b. Alternativ zu dem Rufzustand ist der Wechsel in den sogenannten Queue-Zustand möglich, der dem Zustand in einer Warteschlange entspricht. Diese Wechsel werden zeitlich parallel auf die CTI-Steuereinheit 30 gemeldet, 40A, 40B. Das Gespräch zwischen dem Benutzer des Endgerätes 2 und dem weiteren Benutzer des Endgerätes 3 wird über die Verbindung C1, 32, geführt. Über die CTI-Steuereinheit wird nachfolgend die Einspeisung einer Ansage angefordert, 41. Diese Ansage soll als Mediendatei zur Verfügung stehen. Die Anforderung 42 wird über die MGCP-Instanz 43 an die RTP-Quelle (siehe Fig. 3) weitergeleitet. Alternativ kann die Anforderung 42 über eine SIP-Instanz an die RTP-Quelle weitergeleitet werden. Beim Aushandeln der Verbindung 42 wird der Abrufort der Mediendatei anhand der entsprechenden in der Telekommunikationssteuereinheit 1, 1A, 1B hinterlegten Verknüpfung (nicht dargestellt) mitgeteilt. Der erfolgreiche Abschluss 43A wird sowohl dem Endgerät 2 als auch der CTI-Steuereinheit 30 gemeldet, 44. Der Benutzer des Endgerätes 2 hört anschließend den Inhalt der Mediendatei in Form der Ansage 45.

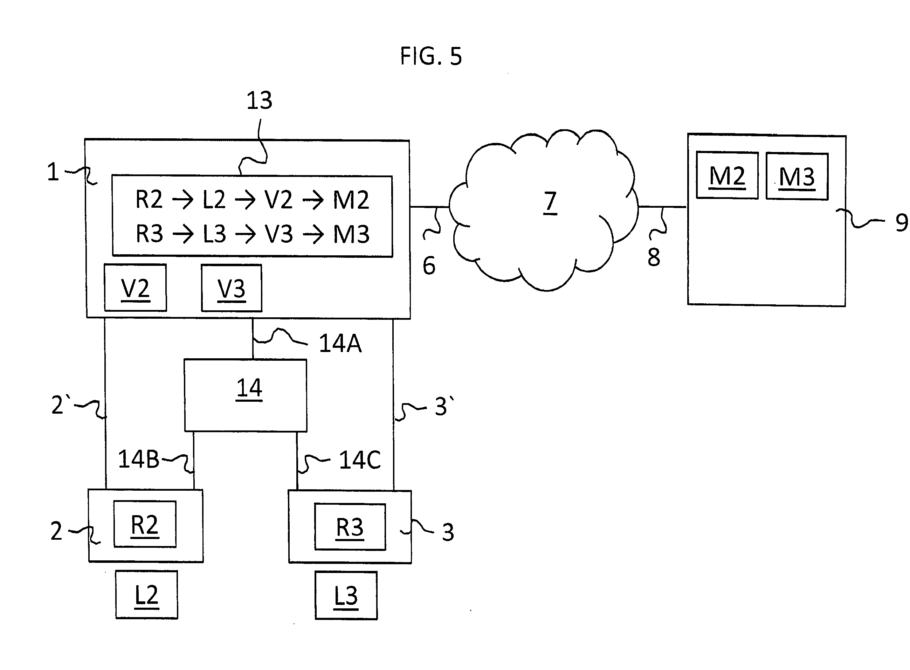

In Fig. 5 ist das erfindungsgemäße Telekommunikationssystem mit extemem Medienserver 9 und einem Präsenzserver 14 dargestellt. In der Telekommunikationssteuereinheit 1, die über die Verbindung 6, das Netzwerk 7 und die Verbindung 8 mit dem externen Medienserver 9 verbunden ist, sind Verknüpfungen V2, V3 zu Mediendateien M2, M3 hinterlegt, wobei die Verknüpfung V2 zu der Mediendatei M2 und die Verknüpfung V3 zu der Mediendatei M3 führt, wobei die Mediendateien M2, M3 auf dem Medienserver 9 abgelegt sind. Das Telekommunikationsendgerät 2 ist über die Verbindung 2' mit der Telekommunikationssteuereinheit 1 und über die Verbindung 14B mit einem Präsenzserver 14 verbunden. Das Telekommunikationsendgerät 3 ist über die Verbindung 3' mit der Telekommunikationssteuereinheit 1 und über die Verbindung 14 C mit dem Präsenzserver 14 verbunden, der seinerseits über eine Verbindung 14A mit der Telekommunikationssteuereinheit 1 verbunden ist. Auf dem Endgerät 2 ist eine dem Benutzer dieses Endgeräts zuordenbare Information in Form einer Rufnummer R2 abgelegt. Auf dem Endgerät 3 ist eine dem Benutzer dieses Endgeräts zuordenbare Information als Rufnummer R3 abgelegt. Vor Abruf der Mediendatei M2, M3 ist die dem Benutzer zuordenbare Information R2, R3 somit in dem Telekommunikationssystem, das die Endgeräte 2, 3, umfasst, vorhanden. Zur Ermittlung eines Standortes L2 des Endgerätes 2 und damit des Benutzers des Endgerätes 2 und/oder des Standortes L3 des Endgerätes 3 und damit des Benutzers des Endgerätes 3 wird die dem Benutzer zuordenbare Information R2 und/oder R3 ausgewertet. Hierzu wird die dem Benutzer des Endgerätes 2 zuordenbare Information R2 über die Verbindung 14B von dem Endgerät 2 an den Präsenzserver 14 übermittelt. Die dem Benutzer des Endgerätes 3 zuordenbare Information R3 wird über die Verbindung 14C von dem Endgerät 3 an den Präsenzserver 14 übermittelt.

Alternativ zu der direkten Übermittlung der den Benutzer zuordenbaren Information R2, R3 über die Verbindung 14B und/oder 14C kann diese dem Benutzer zuordenbare Information über die Verbindung 2' und 3' von der Telekommunikationssteuereinheit 1 über die Verbindung 14A an den Präsenzserver 14 übermittelt werden. Durch die in Fig. 5 gezeigte Ausführungsform mit Verbindungen zu dem Präsenzserver sowohl von der Telekommunikationssteuereinheit 1, 14A, als auch von den Endgeräten 2, 3 in Form der Verbindungen 14B, 14C ist eine Redundanz der Übermittlung der einem Benutzer zuordenbaren Information gegeben, so dass bei Ausfall der Direktverbindungen der Endgeräte 2, 3 zum Präsenzserver 14 oder bei Ausfall der Verbindung 14A von der Telekommunikationssteuereinheit zum Präsenzserver 14 eine Erreichbarkeit des Präsenzservers durch die Telekommunikationssteuereinheit 1 oder die Endgeräte 2, 3 gegeben ist. Der Präsenzserver 14 ermittelt aus den den Benutzern zuordenbaren Informationen R2, R3 die Standorte L2, L3 der Benutzer der Endgeräte 2, 3 und leitet die ermittelten Standorte L2, L3 an die Telekommunikationssteuereinheit 1 weiter. Mittels der ermittelten Standorte L2, L3 wählt die Telekommunikationssteuereinheit für das Endgerät 2 und das Endgerät 3 getrennt abhängig vom ermittelten Standort L2, L3 eine Verknüpfung V2 für das Endgerät L2 und eine Verknüpfung V3 für das Endgerät L3 aus. Sofern dem Benutzer des Endgerätes 2 der Inhalt einer Mediendatei unaufgefordert präsentiert werden soll, ruft die Telekommunikationssteuereinheit 1 anhand der Verknüpfung L2 die Mediendatei M2 von dem Medienserver 9 ab und leitet die Mediendatei M2 über die Verbindung 2' an das Endgerät 2 zum Abspielen des Inhaltes der Mediendatei M2 an das Endgerät 2 weiter. Die Telekommunikationssteuereinheit 1 ruft daneben die Mediendatei M3 über die Verknüpfung V3 von dem Medienserver 9 ab und leitet die Mediendatei M3 über die Verbindung 3' an das Endgerät 3 weiter zum Abspielen des Inhaltes der Mediendatei M3. Bei Ausfall einer der Verbindungen 2' oder 3' kann die Telekommunikationssteuereinheit 1 die Mediendatei M2 und/oder die Mediendatei M3 über die Verbindung 14A, den Präsenzserver 14 und die Verbindung 14B und/oder 14C an das Endgerät 2 und/oder das Endgerät 3 übermitteln.

Der Zeitpunkt der Übermittlung der Mediendatei M2 und/oder der Mediendatei M3 an das Endgerät 2 und/oder das Endgerät 3 wird von der Telekommunikationssteuereinheit 1 dadurch festgelegt, dass die Telekommunikationssteuereinheit feststellt, dass dem Benutzer des Endgerätes 2 und/oder des Endgerätes 3 der Inhalt einer Mediendatei unaufgefordert präsentiert werden soll. Als Mediendateien kommen Audio-Streams und/oder Audiodateien in Betracht, die sich auf einem Medienserver 9 oder auf mehreren externen Servern befinden können. Die zu dem Telekommunikationssystem externen Server können lokal in einem Firmennetz oder im Internet angeordnet sein. Über die Verknüpfung V2, V3, die als URL oder als Netzwerkpfad ausgeführt sein kann, können in einer weiteren Ausführungsform kundenspezifische Parameter übertragen werden, beispielsweise regionale Einstellungen wie die Sprache des Benutzers des Endgerätes 2 und/oder 3 oder lokale Angebote des Dienstleisters, der das Telekommunikationssystem mit der Telekommunikationssteuereinheit 1 und den Endgeräten 2, 3 betreibt.

Unter Bezug auf die dargestellten Ausführungsformen beschriebene Merkmale der Erfindung, wie beispielsweise der Präsenzserver 14 in Fig. 4, können auch bei anderen Ausführungsformen, beispielsweise bei jeder der Anordnungen 10 bis 12 in Fig. 1a bis Fig. 1c, vorhanden sein, außer wenn es anders angegeben ist oder sich aus technischen Gründen von selbst verbietet.

Mit dem erfindungsgemäßen Verfahren und dem erfindungsgemäßen Telekommunikationssystem ist es mithin möglich, automatisch einem Benutzer des Telekommunikationsendgerätes des Telekommunikationssystems individuell auf die Bedürfnisse des Benutzers zugeschnittene Inhalte von Mediendateien unaufgefordert zu präsentieren.

## Patentansprüche

1. Verfahren zum Abruf einer Mediendatei (M2, M3, 27A-27E) in einem Telekommunikationssystem (4, 4A, 4B), das eine Telekommunikationssteuereinheit (1, 1A, 1B) und mehrere an die Telekommunikationssteuereinheit (1, 1A, 1B) angeschlossene Telekommunikationsendgeräte (2, 2A, 2B, 3, 3A-3C) umfasst, wobei ein Inhalt der abgerufenen Mediendatei (M2, M3, 27A-27E) über eine aufgebaute Verbindung (2', 3', 5A, 5B) zu einem der mehreren Telekommunikationsendgeräte (2, 3, 3C) einem Benutzer des Telekommunikationsendgerätes (2, 3, 3C) unaufgefordert präsentiert wird, mit folgenden Schritten:
- Vorsehen einer Schnittstelle (S, SA, SB) in der Telekommunikationssteuereinheit (1, 1A, 1B) derart, dass über die Schnittstelle (S, SA, SB) auf die Mediendatei (M2, M3, 27A-27E), die außerhalb des Telekommunikationssystems (4, 4A, 4B) gespeichert ist, zugegriffen werden kann,
- Einrichten eines von jedem der mehreren Telekommunikationsendgeräte (2, 2A, 2B, 3, 3A-3C) anwählbaren Medienfestlegungszieles (21) in der Telekommunikationssteuereinheit (1, 1A, 1B) zentral für das Telekommunikationssystem (4, 4A, 4B) zur Festlegung der Mediendatei (M2, M3, 27A-27E),
- Anwählen des Medienfestlegungszieles (21) durch eines der mehreren Telekommunikationsendgeräte (2, 2A, 2B, 3, 3A-3C) und Hinterlegen einer Verknüpfung (V1, V2, 28A-28E) zu der Mediendatei (M2, M3, 27A-27E) in der Telekommunikationssteuereinheit (1, 1A, 1B), wodurch die Mediendatei (M2, M3, 27A-27E) festgelegt wird, und
- Abrufen der Mediendatei (M2, M3, 27A-27E) gemäß der in der Telekommunikationssteuereinheit (1, 1A, 1B) hinterlegten Verknüpfung (V1, V2, 28A-28E) über die Schnittstelle (S, SA, SB) durch die Telekommunikationssteuereinheit (1, 1A, 1B).

2. Verfahren nach Anspruch 1, bei dem
die Mediendatei (M2, M3, 27A-27E) als eine Audiodatei (27A-27C), eine Videodatei, ein Audio-Stream (27E) oder ein Video-Stream vorliegt, wobei als Audio-/Video-Stream (27E) insbesondere ein Livestream eines Internet-Senders verwendet wird.

3. Verfahren nach Anspruch 1 oder 2, bei dem
eine dem Benutzer zuordenbare Information (R2, R3), die in dem Telekommunikationssystem (4, 4A, 4B) vor dem Abruf der Mediendatei (M2, M3, 27A-27E) vorliegt, zur Ermittlung eines Standortes (L2, L3) des Benutzers ausgewertet wird und die Mediendatei (M2, M3, 27A-27E) abhängig von dem ermittelten Standort (L2, L3) des Benutzers durch Auswahl einer dem ermittelten Standort (L, L3) zugeordneten Verknüpfung (V2, V3) abgerufen wird.

4. Verfahren nach Anspruch 3, bei dem
ein Präsenzserver (14) an die Telekommunikationssteuereinheit (1) angeschlossen wird, die dem Benutzer zuordenbare Information (R2, R3) von der Telekommunikationssteuereinheit (1) oder von dem Telekommunikationsendgerät (2, 3) an den Präsenzserver (14) übermittelt wird, die dem Benutzer zuordenbare Information (R, R3) zur Ermittlung des Standortes (L2, L3) des Benutzers von dem Präsenzserver (14) ausgewertet wird, und eine Information über den ermittelten Standort (L2, L3) von dem Präsenzserver (14) an die Telekommunikationssteuereinheit (1) übermittelt wird.

5. Verfahren nach Anspruch 3 oder 4, bei dem
die dem Benutzer zuordenbare Information (R2, R3) als Telefonnummer des Benutzers vorliegt und die Mediendatei (M2, M3, 27A-27E) als Livestream eines örtlichen Radiosenders gemäß dem ermittelten Standort (L2, L3) des Benutzers abgerufen wird.

6. Verfahren nach einem der vorhergehenden Ansprüche, bei dem
die Mediendatei (M2, M3, 27A-27E) auf einem über die Schnittstelle (S, SA, SB) mit der Telekommunikationssteuereinheit (1, 1A, 1B) verbundenen Medienserver (9) außerhalb des Telekommunikationssystems (4, 4A, 4B) gespeichert wird, wobei der Medienserver (9) als Cloud im Internet (7) oder als Server in einem LAN/WAN (7A) vorliegt.

7. Verfahren nach einem der vorhergehenden Ansprüche, bei dem
die Verknüpfung (V2, V3, 28A-28E) als Link, insbesondere URL (28C), oder als Netzwerkpfad (28D) in der Telekommunikationssteuereinheit (1, 1A, 1B) hinterlegt wird.

8. Computerprogrammprodukt zum Ausführen des Verfahrens nach einem der Ansprüche 1 bis 7.

9. Server, auf dem das Computerprogrammprodukt nach Anspruch 8 installiert ist.

10. Telekommunikationssystem (4, 4A, 4B), das eine Telekommunikationssteuereinheit (1, 1A, 1B) und mehrere an die Telekommunikationssteuereinheit (1, 1A, 1B) angeschlossene Telekommunikationsendgeräte (2, 2A, 2B, 3, 3A-3C) umfasst, zum Abruf einer Mediendatei (M2, M3, 27A-27E), wobei ein Inhalt der abgerufenen Mediendatei (M2, M3, 27A-27E) über eine aufgebaute Verbindung (2', 3', 5A, 5B) zu einem der mehreren Telekommunikationsendgeräte (2, 2A, 2B, 3, 3A-3C) einem Benutzer des Telekommunikationsendgerätes (2, 2A, 2B, 3, 3A-3C) unaufgefordert präsentierbar ist, mit
- einer Schnittstelle (S) in der Telekommunikationssteuereinheit (1, 1A, 1B), die derart ausgeführt ist, dass über die Schnittstelle (S) auf die Mediendatei (M2, M3, 27A-27E), die außerhalb des Telekommunikationssystems (4, 4A, 4B) gespeichert ist, zugegriffen werden kann,
- einer Medienfestlegungszieleinheit (15), die derart ausgeführt ist, dass von jedem der mehreren Telekommunikationsendgeräte (2, 2A, 2B, 3, 3A-3C) ein Medienfestlegungsziel (21) anwählbar ist, das in der Telekommunikationssteuereinheit (1, 1A, 1B) zentral für das Telekommunikationssystem (4, 4A, 4B) derart eingerichtet ist, dass die Mediendatei (M2, M3, 27A-27E) festlegbar ist, wobei
- die Telekommunikationssteuereinheit (1, 1A, 1B) derart eingerichtet ist, dass, wenn das Medienfestlegungsziel (21) durch eines der mehreren Telekommunikationsendgeräte (2, 2A, 2B, 3, 3A-3C) angewählt ist, eine Verknüpfung (V1, V2, 28A-28E) zu der Mediendatei (M2, M3, 27A-27E) in der Telekommunikationssteuereinheit (1, 1A, 1B) hinterlegbar ist, wodurch die Mediendatei (M2, M3, 27A-27E) festgelegt ist, und
- die Mediendatei (M2, M3, 27A-27E) gemäß der in der Telekommunikationssteuereinheit (1, 1A, 1B) hinterlegten Verknüpfung (V2, V3, 28A-28E) über die Schnittstelle (S) durch die Telekommunikationssteuereinheit (1, 1A, 1B) abrufbar ist.
